# EUROPEAN PATENT APPLICATION

(11) **EP 1 622 142 A2**
(43) Date of publication of application: **01.02.2006**
(21) Application number: 05254698.3
(22) Date of filing: 27.07.2005
(51) Int. Cl.: G11B 17/04

(54) **Optical disk device**

(30) Priority: 27.07.2004 JP 2004219177
(71) Applicant: ORION ELECTRIC CO., Ltd., Takefu-City, Fukui 915-8555 (JP)
(72) Inventor: Nishide, Masahiko, Takefu-city Fukui 915-8555 (JP); Osaki, Tetsuro, Takefu-city Fukui 915-8555 (JP); Hara, Hirotoshi, Takefu-city Fukui 915-8555 (JP)
(74) Representative: Paget, Hugh Charles Edward

(57) **Abstract**

The invention provides a practical optical disk device having a downsized means for elevating a movable chassis including a pickup and a turntable, wherein the movable chassis is positioned stably while recording or reproducing data. A movable chassis 20 can be moved up and down via a supporting point 52 provided on a rear side 21, and has two projections 23 formed on a front wall 22 of the movable chassis 20, wherein one of the projections 23 is slidably engaged with a guidance slot 41 formed to an elevating plate 40 opposed thereto, by which the movable chassis 20 is moved up and down, and the other projection 23 is engaged with an engagement groove 47 formed separately from the slot when the first projection 23 is engaged with one end of parallel portions 44 extended from both ends of the guidance slot 41 to thereby support the movable chassis 20 in a stable manner.

## Description

### BACKGROUND OF THE INVENTION

### Field of the invention

The present invention relates to an optical disk device used for reproducing data on an optical disk such as a DVD, and especially relates to an optical disk device capable of supporting the optical disk in a stable manner.

### Description of the related art

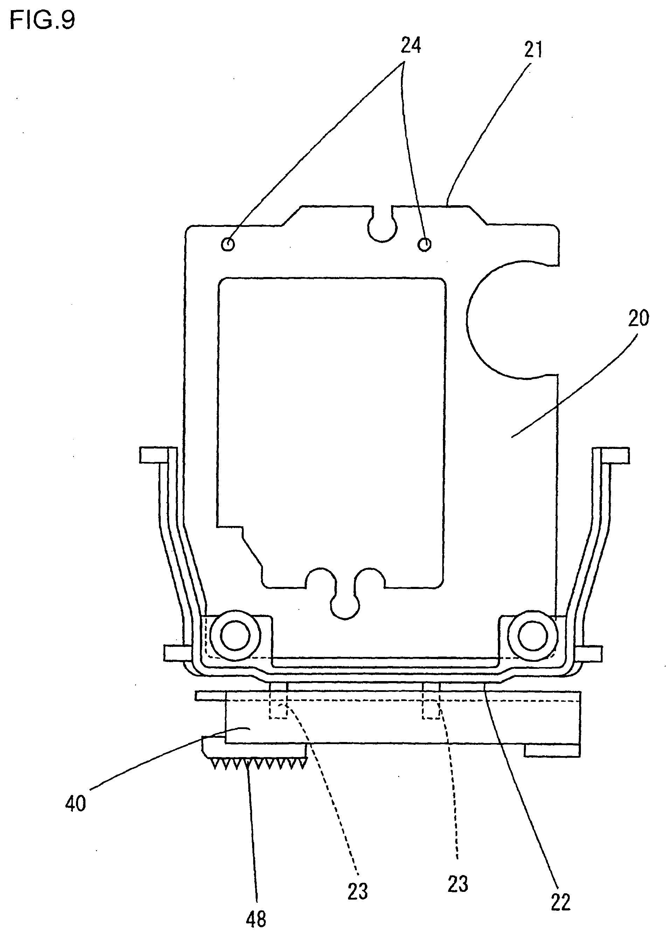

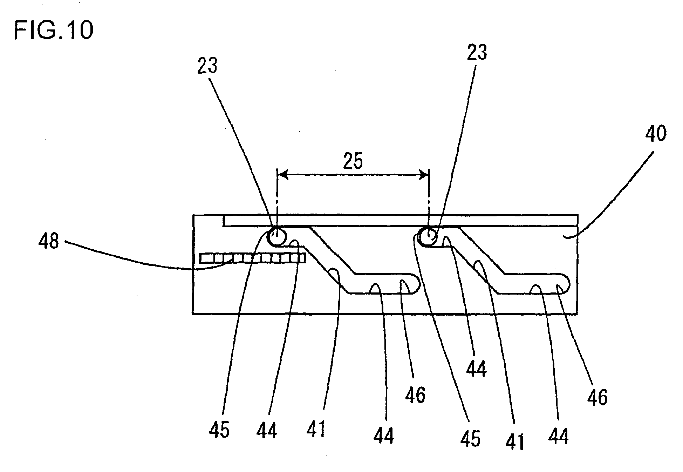

The following prior art is known as one example of a conventional optical disk device. As illustrated in FIG. 9 in which an optical disk inserting/ejecting side of a disk tray (not shown) is positioned downward, a movable chassis 20 is supported via buffer members (not shown) mounted on buffer member mounting holes 24 provided at two locations at a rear side 21 of the chassis between a frame not shown, and the movable chassis 20 is disposed so as to move up and down with the buffer members functioning as supporting points. Further, projections 23 are arranged horizontally at two locations on a front wall 22 of the movable chassis 20, as shown in FIG. 10. Moreover, an elevating plate 40 is provided at a position opposing the front face of the movable chassis, guided by an elevating plate guidance portion (not shown) so as to be able to slide sideways, the plate having guidance slots 41 provided horizontally at two locations as shown in FIG. 10. Each guidance slot 41 provided at two locations has parallel portions 44 of the guidance slot extending sideways from both ends thereof, and the slots are slidably engaged with projections 23 provided at two locations of the front wall 22 of the movable chassis 20. Moreover, the elevating plate 40 has a rack 48 for converting the rotary drive force of a drive motor not shown into a linear motion. The elevating plate 40 can move sideways and back by the rack 48 converting the rotary drive force of the drive motor, and via the guidance slots 41 provided on the elevating plate 40, the front side of the movable chassis 20 becomes a free end that can be moved up and down with the buffer members acting as supporting points.

Further according to FIG. 10, the height of the upper face of the movable chassis 20 is substantially equal to the upper rim of the elevating plate 40, with a clamper and a turntable not shown holding the optical disk (not shown) therebetween. In this state, the projections 23 provided at two locations on the front wall 22 of the movable chassis are each engaged with an end 45 of the parallel portions 44 extended from the two guidance slots 41 provided on the elevating plate 40, as shown in FIG. 10.

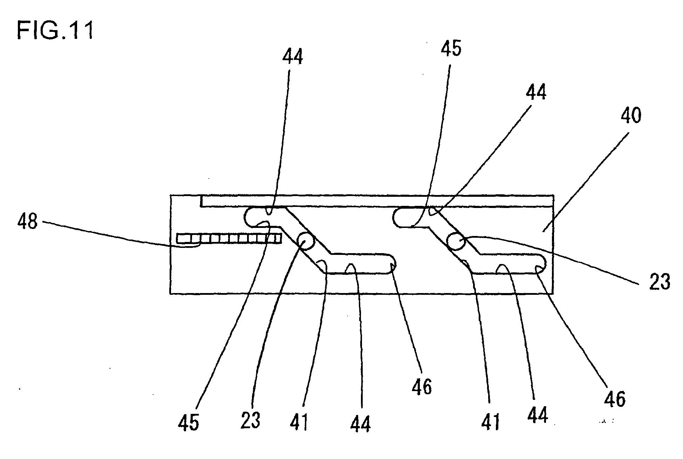

Next, FIG. 11 is an explanatory view showing the movable chassis 20 at its half-descended state. The optical disk held between the clamper and turntable not shown is moved away from the clamper and turntable and is in contact with the mounting surface of a disk tray (not shown), and the front side of the elevating plate 40 is descended from the position shown in FIG. 10 with the front side of the movable chassis 20 starting to move downwards. In this state, the two projections 23 formed on the front wall 22 of the movable chassis is moved in sliding motion in the two guidance slots 41 formed on the elevating plate 40.

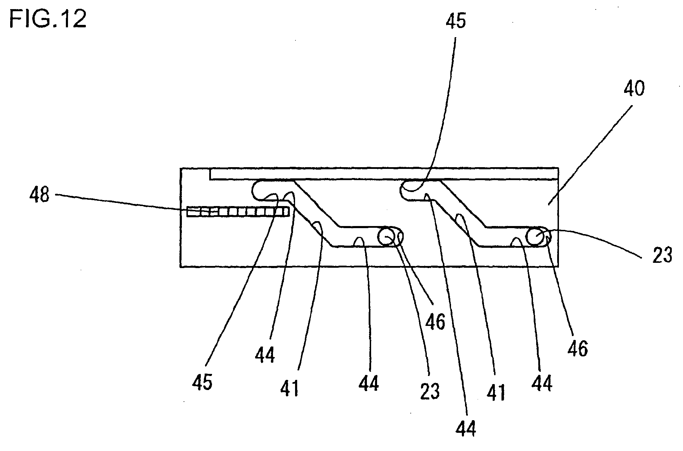

FIG. 12 will now be described in detail. The movable chassis 20 has completed its descent so as to enable the optical disk to be taken out from the optical disk device. The projections 23 provided at two locations on the front wall 22 of the movable chassis 20 are each moved to the other end 46 on a right side of the parallel portions 44 extended from the guidance slots 41, and engaged therewith.

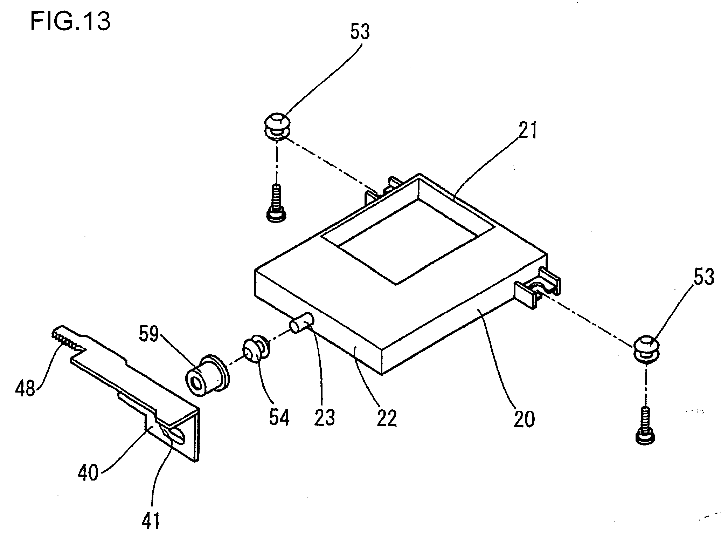

Japanese Patent Application Laid-Open Publication No. 2003-223776 (Patent document 1) discloses an arrangement in which a receive member (turntable, not shown) of a chucking mechanism and a disk press member (clamper, not shown) for clamping an optical disk (not shown) are provided so as to be apportioned to the upper position and a lower position of a disk tray not shown, as shown in FIG. 13. An edge 21 in the longitudinal direction of a drive chassis (movable chassis) 20 on which the disk press member is mounted is disposed on a machine frame (frame) via a first buffer body 53. A free end (front wall) 22 of the drive chassis (movable chassis) 20 is connected, through a second buffer body 54 consisting of a rubber vibration insulator, to the movable body 59 which is guided so as to move up and down by a cam groove (guidance slot) 41 of a cam plate (elevating plate) 40 disposed to oppose to the free end (front wall) 22 of the drive chassis (movable chassis) 20. The movable body 59 is made of a hollow cylindrical axial body, and the second buffer body 54 is positioned in a pressured state between the movable body 59 and an axial protrusion 23 protruded at the free end (front wall) 22 of the drive chassis (movable chassis) 20.

According to the prior art, the elevating plate is moved back and forth in the left and right directions by converting the rotary drive force of the drive motor via the rack into a linear motion, and the two projections provided on the front side of the movable chassis slide in the guidance slots provided at two locations on the elevating plate to enable the movable chassis to have a free end that moves up and down with the buffer members provided at two locations on the rear side thereof acting as supporting points. Thereby, the movable chassis is supported at four locations, by two projections engaged with the sliding portions of the guidance slots and two buffers. However, the distance between two projections provided on the front side (or side in which the optical disk is inserted and removed) so as to prevent the movable chassis from tilting in the width direction and to ensure stability is somewhat narrowed down since guidance slots are provided at two locations within the limited width of the movable chassis, and the mounting locations of the projections are inevitably biased with respect to the center of width of the movable chassis. Since in the state where the clamper and the turntable hold the optical disk, that is, when the movable chassis is elevated, in other words when the optical disk and the pickup are positioned closely, the optical axis of the laser beam irradiated from the pickup is required to be constantly orthogonal to the recording surface of the optical disk, so that if the movable chassis supporting the pickup is easily tilted in the width direction, or is in fact tilted, the transmitting and receiving of record data with the optical disk will be seriously affected. Further, when the movable chassis starts descending, it is moved away from the optical disk, and when descended, the movable chassis is not specifically required to have positional stability, so the two slanted grooves and projections become substantially meaningless. In contrast, in order to move the movable chassis up and down by the sliding movement of the two projections and the two sliding slots, the width of the elevating plate must be wide, which is a hindrance to the downsizing of the movable chassis drive mechanism, and to the downsizing of the whole disk device.

Moreover, according to the disk device disclosed in patent document 1, the movable body for tilting the free end of the movable chassis is formed of an axial body, by which the movable body can be downsized, and since the movable body is axial, the spaces on the left and right sides of the free end of the movable chassis can be utilized such as for disposing a motor. According to the disclosure, the distance between the motor and the rack on the disk tray can be reduced and the arrangement of the train of gears can be simplified. However, since one longitudinal end of the drive chassis (movable chassis) and the machine frame (chassis) are supported via a buffer body, and since there is one set of arrangements to engage the free end of the movable chassis slidably with the movable body capable of insulating shock positioned substantially at the center of the movable chassis and the cam groove (guidance slot) provided on the cam plate (elevating plate), the movable chassis is arranged to be supported at three points via buffer support members. According to this arrangement, relatively small vibration and shock received by the disk device having the optical disk clamped therein can be absorbed, but the collision of a hard object or the like in a condition unintended by the user may have a large impact, possibly leading to damage of the optical disk. Furthermore, when the optical disk is clamped, the free end which is a front end of the movable chassis is supported only at one location, so the positional stability of the movable chassis is not sufficient.

### SUMMARY OF THE INVENTION

The present invention aims at solving the problems of the prior art, by providing a mechanism for moving a movable chassis having a clamper and a turntable for holding and rotating the optical disk and a pickup for recording and/or reproducing data on the optical disk by the sliding movement of the projections provided on the movable chassis with respect to a guidance slot provided on an elevating plate, wherein the shape of the groove formed to the elevating plate for moving the movable chassis up and down is devised to achieve stable clamping operation of the optical disk, to ensure strength of the elevating plate, to stabilize the position of the movable chassis to improve the positional accuracy of the pickup when the optical disk is stored in the optical device, to provide a disk clamp capable of enduring impact, and to enable the elevating plate to be downsized so as to enable downsizing of the drive mechanism of the movable chassis.

A first aspect of the present invention relates to an optical disk device for holding and securing an optical disk between a turntable and a clamper so as to record and reproduce data on the secured optical disk, the optical disk device comprising a movable chassis having the turntable that can be moved up and down in an arc together with the turntable, the movable chassis including projections formed integrally thereto at two locations; an elevating plate having a guidance slot for moving the movable chassis up and down, disposed on a frame of the optical disk device to which the movable chassis is attached; wherein one of the two projections is slidably inserted to the guidance slot, and when said one projection is guided along the guidance slot to move the turntable upward together with the movable chassis, the other of the two projections is engaged with an engagement groove formed to the elevating plate, so that when the projections are guided along the guidance slot by the sliding movement of the elevating plate so that the movable chassis is at its elevated position, one of the two projections is engaged with the guidance slot while the other projection is engaged with the engagement groove, by which the clamper provided on the frame and the turntable provided on the movable chassis hold and secure the optical disk therebetween.

According to the arrangement of the first aspect, one of the projections on the movable chassis is inserted to the guidance slot on the elevating plate while the other one of the projections is engaged with the engagement groove on the elevating plate, so that unlike the prior art optical disk device where a single projection provided on the movable chassis supports the chassis, one projection is engaged with the engagement groove on the elevating plate while another project is inserted to the guidance slot, so the optical disk held between and supported by the turntable and the clamper can be maintained stably and securely, and the action for holding the optical disk can be carried out without fail.

A second aspect of the present invention relates to the optical disk device according to the first aspect, wherein the guidance slot comprises a slanted portion for guiding one of the projections provided on the chassis up and down in correspondence with the sliding movement of the elevating plate, and parallel portions extended from both ends of the slanted portion toward the sliding direction of the elevating plate.

According to the second aspect of the invention, the guidance slot comprises a slanted portion for guiding one of the projections provided on the chassis up and down in correspondence with the sliding movement of the elevating plate, and parallel portions extended from both ends of the slanted portion toward the sliding direction of the elevating plate, so that when the elevating plate is at its stationary position in the elevated position or descended position, one of the projections is positioned at the parallel portion extending from the slot, so that the projection is prevented from moving in the vertical direction by the upper and lower edges of the parallel portion, and thereby the stability of the elevating plate at its stationary position is ensured.

### BRIEF DESCRIPTION OF THE DRAWINGS

FIG. 1 is an explanatory schematic exploded view of the movable chassis and the elevating plate according to one embodiment of the present invention;
FIG. 2 is an explanatory plan view of the movable chassis and the elevating plate according to one embodiment of the present invention;
FIG. 3 is an explanatory front view showing the movable chassis at its elevated position according to one embodiment of the present invention;
FIG. 4 is an explanatory front view showing the movable chassis at is half-descended state according to one embodiment of the present invention;
FIG. 5 is an explanatory front view showing the movable chassis at its descended state according to one embodiment of the present invention;
FIG. 6 is an explanatory side view showing the movable chassis at its elevated position according to one embodiment of the present invention;
FIG. 7 is an explanatory side view showing the movable chassis at its half-descended state according to one embodiment of the present invention;
FIG. 8 is an explanatory side view showing the movable chassis at its descended state according to one embodiment of the present invention;
FIG. 9 is an explanatory plan view of the movable chassis and the elevating plate according to the prior art optical disk device;
FIG. 10 is an explanatory front view showing the movable chassis at its elevated position according to the prior art optical disk device;
FIG. 11 is an explanatory front view showing the movable chassis at its half-descended state according to the prior art optical disk device;
FIG. 12 is an explanatory front view showing the movable chassis at its descended state according to the prior art optical disk device; and
FIG. 13 is an explanatory exploded schematic view of the movable chassis and the elevating plate according to the prior art optical disk device.

### DETAILED DESCRIPTION OF THE PREFERRED EMBODIMENTS

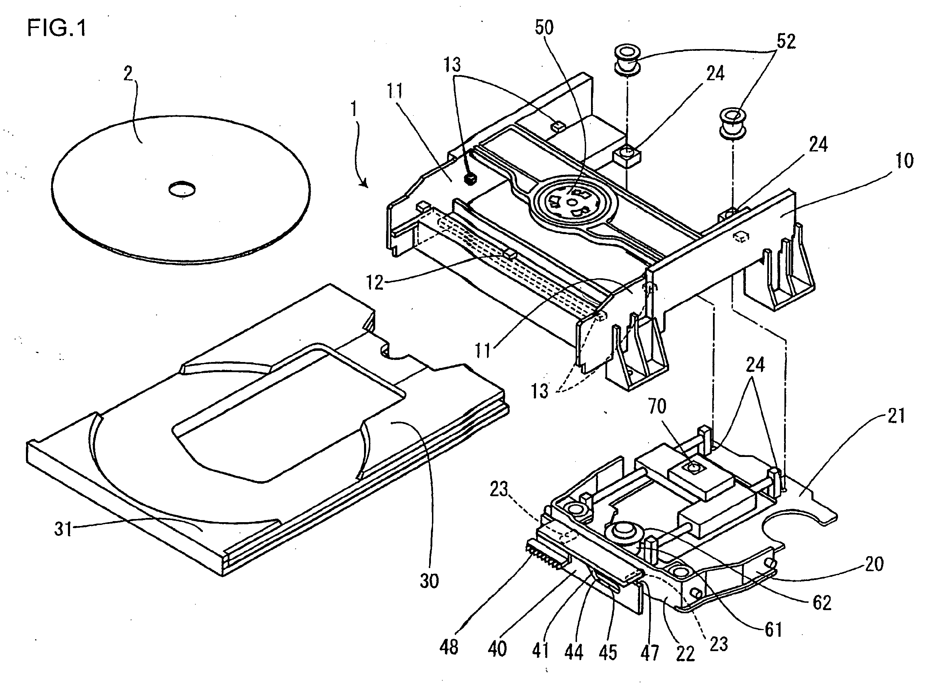

Now, the preferred embodiment for carrying out the present invention will be described with reference to FIGS. 1 through 8. The technical scope of the present invention is not restricted to the language used in the embodiments, but is extended to the range in which a person skilled in the art could easily substitute based on the present disclosure.

FIG. 1 is an explanatory exploded view showing a movable chassis and an elevating plate according to one embodiment of the present invention.

An optical disk device 1 shown in FIG. 1 comprises a disk tray 30 for mounting on a frame 10 in removable manner an optical disk (recording medium) 2, capable of moving in and out of the optical disk device 1 by being disposed slidably in front and rear directions on a tray guide portion 13 provided on a side wall portion 11 of the frame 10, and a clamper 50 disposed on the frame 10 for pressing the optical disk 2 mounted on a turntable 62 from the upper direction to clamp the optical disk 2. Further, buffer member mounting holes 24 are provided at two locations on the rear side of the frame, and a movable chassis 20 supported by the buffer members 52 is disposed movably in up and down directions. A disk drive motor 61 is disposed on the movable chassis 20, supporting a turntable 62 disposed on a drive shaft of the disk drive motor 61 for transmitting the rotary drive force thereof to the optical disk 2. Furthermore, the movable chassis 20 includes a pickup 70 for irradiating laser beams on a recording surface of the optical disk 2 to record and/or reproduce data. According to this arrangement, the turntable 62, the pickup 70 and the like disposed on the movable chassis 20 are moved up and down in an arc along with the up-down movement of the movable chassis 20.

Next, a front wall 22 disposed on the front portion of the movable chassis 20 and an elevating plate 40 disposed opposite the wall 22 shown in FIG. 1 are described. On the front side of the frame 10, are disposed an elevating plate guiding portion 12 for slidably moving the elevating plate 40 in the left and right directions of the drawing and a rack 48 for driving the elevating plate 40 in the left and right directions via a gear and a pinion not shown. Further, cylindrical column-shaped projections 23 are disposed at even intervals at two locations on the front wall 22 of the movable chassis 20, and at opposing locations on the elevating plate 40 are disposed a guidance slot 41 and an engagement groove 47, which are slidably engaged with the projections 23 disposed at said two locations. According to this arrangement, the rotational drive force from the pinion not shown is transmitted via the rack 48 as linear drive force of the elevating plate 40 moving in the left and right directions, which is transmitted via the guidance slot 41 to the movable chassis 20, and the movable chassis 20 is moved up and down with the buffer member 52 disposed at two locations as supporting points.

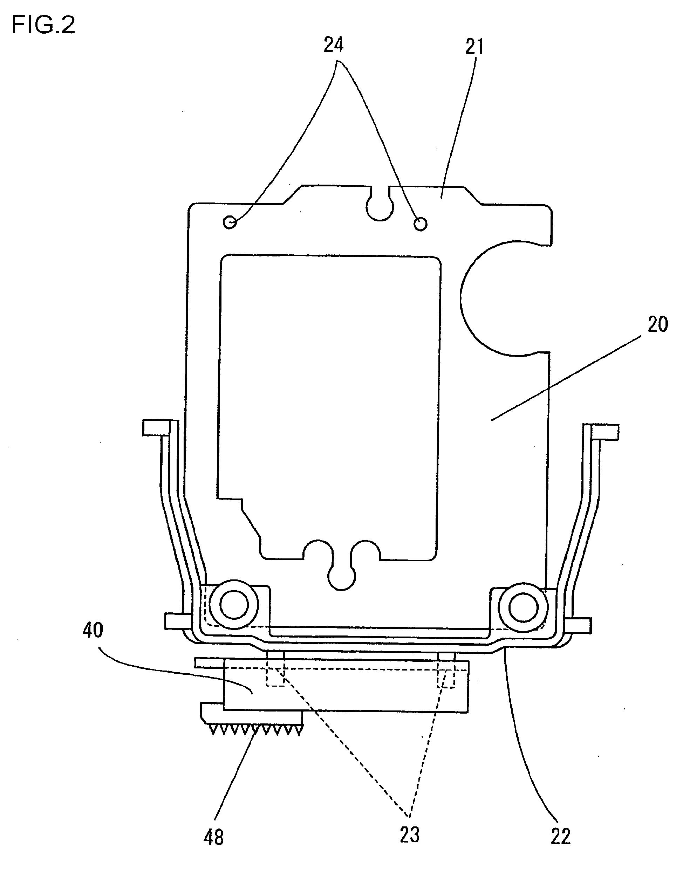

Next, the movement of the movable chassis 20 and the elevating plate 40 will be described in detail with reference to FIGS. 2, 3 and 6.

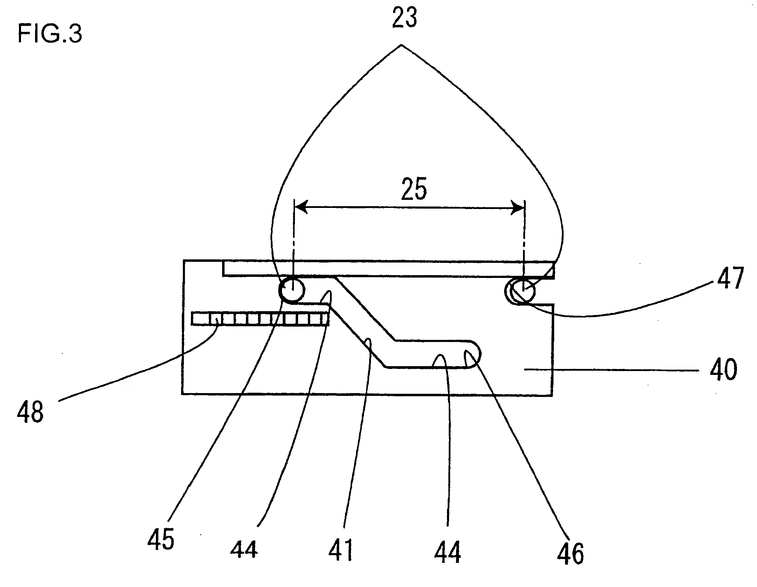

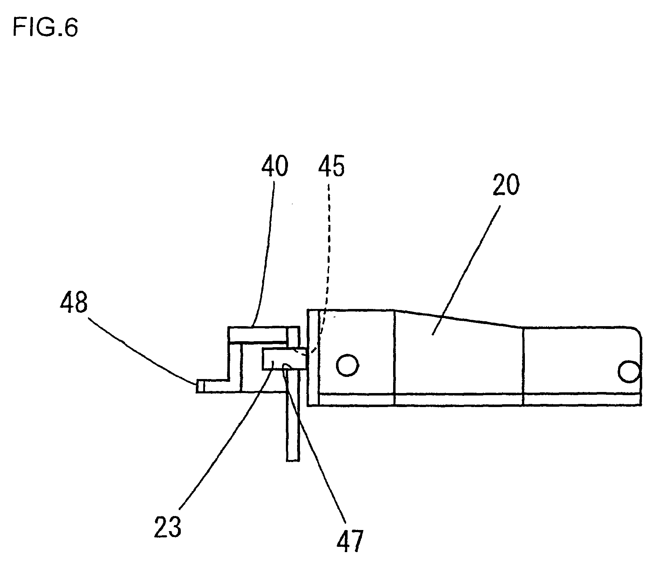

FIG. 2 is a plan view of the arrangement of the movable chassis and the elevating plate according to the present embodiment. Further, FIG. 3 is a front view of the arrangement of the movable chassis and the elevating plate, and in both drawings, the movable chassis is at the elevated position. FIG. 6 is a side view of the movable chassis at the elevated position and the elevating plate. Cylindrical column-shaped projections 23 are formed at predetermined intervals on the front wall 22 of the movable chassis 20 as shown in FIG. 2, and in the front view of FIG. 3, parallel portions 44 of the guidance slot is provided at both ends of the guidance slot 41 on the elevating plate 40, with one of the cylindrical column-shaped projections 23 engaged with one end 45 of the parallel portion 44 of the guidance slot. Further, an engagement groove 47 that is engaged with the other projection 23 is formed on the elevating plate 40 at the same intervals corresponding to the two projections. In FIGS. 2 and 3, the movable chassis 20 is at the elevated position as illustrated in FIG. 6, showing a state in which the optical disk 2 shown in FIG. 1 is held between the clamper 50 and the turntable 62. Thereby, the movable chassis 20 is engaged with the elevating plate 40 at two locations, one end 45 of the parallel portion 44 of the guidance slot 41 and the engagement groove 47 formed to the elevating plate 40. Thus, the movable chassis 20 is supported at a total of four locations, which are the above two locations plus the two locations of the buffer members 52, by which the positional stability of the movable chassis 20 is ensured. Further, the engagement groove 47 formed to the elevating plate 40 is substantially designed by omitting the prior art guidance slot 41 and the other one of the extended parallel portions 44 of the guidance slot, enabling the distance between the two projections 23 to be extended corresponding to the omitted length. Accordingly, the stability of the engagement position of the movable chassis 20 is improved corresponding to the extended distance. Moreover, in FIG. 2, the above-mentioned length that can be omitted is somewhat narrowed down to locate the two projections 23 or the guidance slot 41 and the engagement groove 47 somewhat closer, but still the distance between the two projections 23 are wider than the prior art, making it possible to shorten the width size of the elevating plate 40 while ensuring stability thereof.

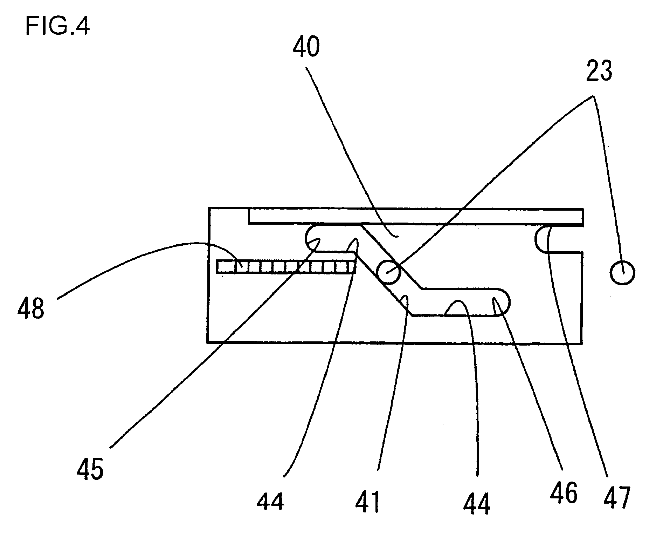

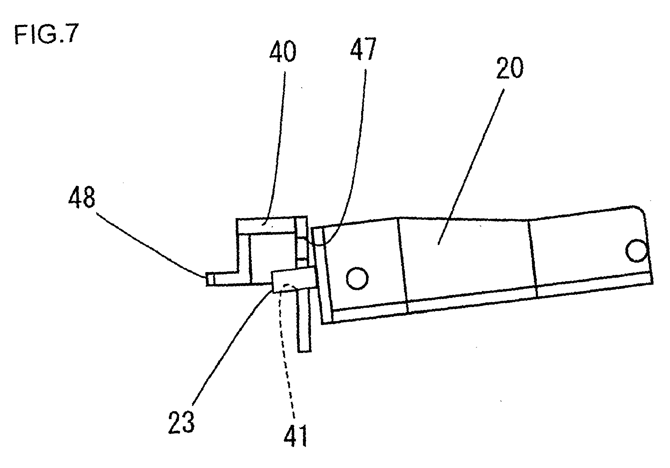

Next, FIGS. 4 and 7 illustrate a state in which the movable chassis 20 according to the present invention is partially descended. The elevating plate 40 is moved toward the left direction of the drawing, and the projections 23 formed to the movable chassis 20 are disengaged from the engagement groove 47 and the one end 45 of the parallel portion 44 of the guidance slot 41.

As shown in FIG. 7, the front side of the movable chassis 20 is somewhat lowered, wherein one of the projections 23 formed to the movable chassis 20 shown in FIG. 4 is separated from the end 45 of the parallel portion 44 of the guidance slot 41 and moved in sliding motion along the frame of the guidance slot 41, and the other of the projections 23 formed to the movable chassis 20 is disengaged from the engagement groove 47 formed to the elevating plate 40. Therefore, when the movable chassis 20 descends, it is guided only by the guidance slot 41. Further, when the movable chassis 20 descends, the optical disk 2 clamped between the turntable 50 and the clamper 62 of FIG. 1 is released from the clamp and placed on the mounting surface of the disk tray 30.

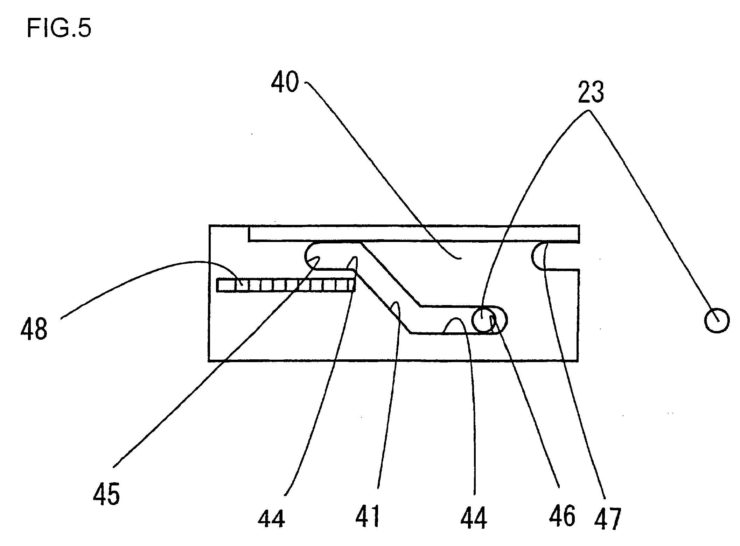

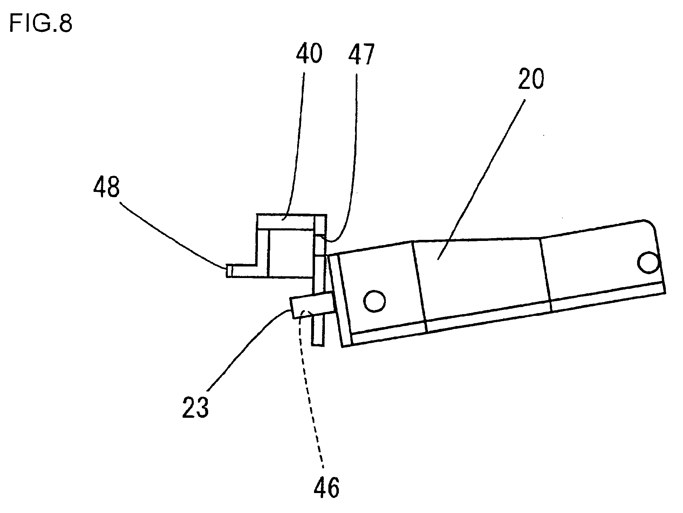

Next, FIGS. 5 and 8 illustrate a state in which the movable chassis 20 of the present invention is completely descended, with the optical disk 2 illustrated in FIG. 1 placed on the disk tray 30 ejected (pulled out) toward the front direction in FIG. 1, or with the optical disk 2 removed from the ejected disk tray 30. In other words, they illustrate a state in which a new optical disk 2 is to be inserted to the disk tray.

The elevating plate 40 shown in FIG. 5 is moved toward the left direction of the drawing with one of the projections 23 formed to the movable chassis 20 engaged with the other end 46 of the parallel portion 44 of the guidance slot 41 formed to the elevating plate 40, and the front face of the movable chassis 20 is moved to its lowest position as illustrated in FIG. 8. In this state, the movable chassis 20 is supported at one point by the cylindrical column-shaped projection 23 formed to the front wall 22 of the chassis 20 being engaged with the end 46 of the parallel portion 44 of the guidance slot 41 formed to the elevating plate 40, but this is not a problem since the chassis is at a position requiring no special engagement position accuracy.

As described, the movable chassis 20 has buffer members 52 located at two locations on a rear side 21 thereof opposite from the optical disk inserting/ejecting side 31 of the disk tray 30, and is supported on the frame 10 with the two buffer members 52 functioning as supporting points. Thus, the movable chassis 20 capable of moving up and down with respect to the optical disk 2 placed on the disk tray 30 can be moved up and down in an arc with the buffer members 52 functioning as supporting points. Along with the movement of the elevating plate 40 in the left and right directions, the projection 23 formed on the movable chassis 20 is guided in the guidance slot 41 on the elevating plate 40 along with which the movable chassis 20 is moved up and down with the buffer members 52 functioning as supporting points, and the disk drive motor 61, the turn table 62 and the pickup 70 supported on the movable chassis 20 can be moved toward or away from the optical disk 2.

In a more detailed description, substantially cylindrical column-shaped projections 23 are formed at two locations on a front wall 22 of the movable chassis 20 at predetermined distances 25 in the width direction of the optical disk inserting/ejecting side 31. Furthermore, an elevating plate 40 is positioned facing the front wall 22 of the movable chassis 20, which is supported so as to be able to slide along the width direction of the front wall 22 of the movable chassis 20 by a guidance portion 12 formed to the frame 10. Further, the elevating plate 40 has a guidance slot 41 that is slidably engaged with one of the projections 23 formed to the front wall 22 of the movable chassis 20, and on both sides of the guidance slot 41 are formed parallel portions 44 extending in the width direction of the front wall 22 of the chassis 20, wherein one end 45 of the parallel portion 44 of the guidance slot 41 is engaged with one of the projections 23 formed at two locations. The elevating plate 40 further has an engagement groove 47 that is formed as a notch in the width direction of the front wall 22 at a position corresponding to the other projection 23. By providing this elevating plate 40, when an optical disk 2 is placed in the optical disk device 1 and clamped between the turntable 62 and the clamper 50, the projections 23 at two locations are engaged with the one end 45 of the parallel portion 44 extended from the guidance slot 41 and the engagement groove 47 thereby supporting the movable chassis 20, ensuring the positional stability of the movable chassis 20. Further, upon releasing the clamp of the optical disk 2 and removing the same from the turntable 62, the descending of the movable chassis 20 is guided only by one of the cylindrical column-shaped projections 23 and the guidance slot 41, according to which the engagement is maintained.

Compared to the prior art arrangement having two sets of guidance slots 41 and two parallel portions 44 extended therefrom, the above-described arrangement of the two projections 23 formed to the movable chassis 20, the guidance slot 41, the parallel portions 44 extended from the guidance slot 41 and the engagement groove 47 formed to the elevating plate 40 are designed so that only one of the guidance slots 41 and parallel portions 44 extended therefrom remains with the other guidance slot 41 and the parallel portions 44 extended therefrom omitted, leaving only one of the extended parallel portions 44. Therefore, the present embodiment enables to reduce the length of the plate corresponding to the omitted guidance slot 41 and one parallel portion 44. In other words, the width of the elevating plate 40 can be downsized corresponding to the omitted length, but on the other hand, the width of the plate 40 can remain as it is with the distance 25 between the two projections 23 formed to the movable chassis 20 extended. By expanding the distance 25 between the two projections 23, the stability of the movable chassis 20 in the width direction is improved greatly. As for the elevating plate 40, since one of the guidance slots 41 and parallel portions 44 can be omitted, slots and grooves can be reduced greatly, and the strength of the plate can be improved while suppressing deflection, so various shape changes are possible in the designing stage corresponding to this increased strength such as reducing the height of the movable chassis 20 to minimize size or to narrow down the width thereof, and the freedom of design is thereby improved. Thus, the drive mechanism for elevating the movable chassis 20 can be downsized, and the optical disk device 1 can be made more compact.

According to the prior art, the distance 25 between two projections 23 provided to ensure stability of the movable chassis 20 by preventing tilt of the chassis in the width direction is limited since two guidance slots 41 are provided, and the locations of the projections 23 are biased with respect to the center of width of the movable chassis 20, which is undesirable since when the movable chassis 20 is at its elevated position with the optical disk 2 clamped by the clamper 50 and the turntable 62, that is, when the optical disk 2 is positioned close to the pickup 70, the recording surface of the optical disk 2 is required to be constantly orthogonal to the optical axis of the laser beam irradiated from the pickup 70, but with the movable chassis 20 supporting the pickup 70 easily tilted in the width direction, the data recorded in the optical disk 2 cannot be picked up. Such prior art problems can be solved by the present invention. The disk device proposed in patent document 1 adopts a mechanism in which a movable body (projection) positioned substantially at the center of the movable chassis 20 with a cam groove (guidance groove) on a cam plate (elevating plate) is supported only on a single point, according to which the positional stability of the movable chassis 20 is deteriorated, but the present invention overcomes this problem as well.

The preferred embodiment of the present invention has been described, but the present invention is not restricted to this embodiment, and various changes can be made within the scope of the present invention. For example, the direction of tilt of the guidance slot 41 on the elevating plate 40, the arrangement of the parallel portions 44 extending from the guidance slot and the arrangement of the engagement groove 47 are not restricted to those disclosed in the present embodiment, and they can be changed appropriately to correspond to various uses.

The effects of the present invention are as follows.

According to the optical disk device of the first aspect of the present invention for holding and securing an optical disk between a turntable and a clamper so as to record and reproduce data on the secured optical disk, the optical disk device comprising a movable chassis having the turntable that can be moved up and down in an arc together with the turntable, the movable chassis including projections formed integrally thereto at two locations; an elevating plate having a guidance slot for moving the movable chassis up and down, disposed on a frame of the optical disk device to which the movable chassis is attached; wherein one of the two projections is slidably inserted to the guidance slot, and when said one projection is guided along the guidance slot to move the turntable upward together with the movable chassis, the other of the two projections is engaged with an engagement groove formed to the elevating plate, so that the optical disk held between the turntable and the clamper can be supported at a stable and secure condition, and the holding movement for holding the optical disk is carried out without fail, enabling the optical device to operate stably with reduced possibility of malfunction.

According to the second aspect of the invention, the guidance slot comprises a slanted portion for guiding one of the projections provided on the chassis up and down in correspondence with the sliding movement of the elevating plate, and parallel portions extended from both ends of the slanted portion toward the sliding direction of the elevating plate, so that when the elevating plate is at its stationary position in the elevated position or descended position, one of the projections is positioned at the parallel portion extending from the slot, so that the projection is prevented from moving in the vertical direction by the upper and lower edges of the parallel portion, and thereby the stability of the elevating plate at its stationary position is ensured. Furthermore, at the elevated position, one of the two projections is engaged with the extended parallel position and the other projection is engaged with the engagement groove formed to the elevating plate, so that the two projections are prevented from moving in the vertical direction by the upper and lower edges of the parallel portion and the engagement groove, and therefore, the optical disk held between the turntable and the clamper can be held stably and securely. Furthermore, according to the present elevating plate, one portion of the guidance slots and one of the parallel portions are omitted, according to which the slots and grooves formed to the plate are greatly reduced, so that the strain of the plate is suppressed and the strength is increased, and therefore, the shape of the movable chassis can be changed during the design stage to correspond to the increase in strength such as by reducing the height or the width of the movable chassis to downsize the chassis, according to which the freedom of design of the movable chassis is increased. Thus, the mechanism for driving the movable chassis up and down can be downsized, which leads to downsizing the optical disk device itself.

## Claims

1. An optical disk device for holding and securing an optical disk between a turntable and a clamper so as to record and reproduce data on the secured optical disk, the optical disk device comprising:
a movable chassis having the turntable that can be moved up and down in an arc together with the turntable, the movable chassis including projections formed integrally thereto at two locations;
an elevating plate having a guidance slot for moving the movable chassis up and down, disposed on a frame of the optical disk device to which the movable chassis is attached; wherein
one of the two projections is slidably inserted to the guidance slot, and when said one projection is guided along the guidance slot to move the turntable upward together with the movable chassis, the other of the two projections is engaged with an engagement groove formed to the elevating plate, so that when the projections are guided along the guidance slot by the sliding movement of the elevating plate and the movable chassis is at its elevated position, one of the two projections is engaged with the guidance slot while the other projection is engaged with the engagement groove, by which the clamper provided on the frame and the turntable provided on the movable chassis hold and secure the optical disk therebetween.

2. The optical disk device according to claim 1, wherein the guidance slot comprises a slanted portion for guiding one of the projections provided on the chassis up and down in correspondence with the sliding movement of the elevating plate, and parallel portions extended from both ends of the slanted portion toward the sliding direction of the elevating plate.
